# EUROPÄISCHE PATENTANMELDUNG

(11) **EP 1 835 595 A2**
(43) Veröffentlichungstag der Anmeldung: **19.09.2007**
(21) Anmeldenummer: 07103854.1
(22) Anmeldetag: 09.03.2007
(51) Int. Cl.: H02K 1/14

(54) **Einphasiger Geschalteter Reluktanzmotor**

(30) Priorität: 16.03.2006 DE 102006012554
(71) Anmelder: Motec Components GmbH & Co. KG, 98529 Suhl (DE)
(72) Erfinder: Grobeis, Detlev, 98553, Schleusingen (DE); Pfannschmidt, Klaus, 98617, Meiningen (DE)
(74) Vertreter: Engel, Christoph Klaus

(57) **Zusammenfassung**

Die Erfindung betrifft einen einphasigen geschalteten Reluktanzmotor (20), auch SR-Motor genannt. Der Motor besitzt einen Stator (21), einen Rotor (23), ein Mittel (43) zur Start-Positionierung des Rotors (23) und eine elektronische Steuerschaltung (60) zur Bestromung der Wicklungen (27). Der Stator (21) besitzt sechs Statorpole (22), die jeweils im Winkel von 60° zueinander angeordnet sind, und drei U-förmige Eisenkerne (26), die jeweils zwei nebeneinander liegende Statorpole (22) bilden.

## Beschreibung

Die vorliegende Erfindung betrifft einen einphasigen geschalteten Reluktanzmotor, dessen Stator U-förmige Eisenkerne umfasst.

Geschaltete Reluktanzmotoren, auch als Switched-Reluctance-Motor oder kurz SR-Motor bezeichnet, finden zunehmend Verwendung, da sie auf Grund ihrer bürstenlosen Betriebsweise robust sind und nunmehr verbesserte Lösungen zur elektronischen Ansteuerung verfügbar geworden sind. Einphasige SR-Motoren stellen die einfachste Bauform solcher SR-Motoren dar. Bei einphasigen SR-Motoren werden alle Wicklungen gleichzeitig bestromt.

Aus der EP 1 391 980 A2 ist ein einphasiger SR-Motor in einer typischen Bauform mit sechs Polen bekannt, auf dessen Innenseite mehrere Pole in Richtung des innen laufenden Rotors ausgebildet sind. Einphasige SR-Motoren weisen oft vier, sechs oder acht Pole auf. Es sind aber prinzipiell beliebige Polzahlen möglich. Die Polzahl beeinflusst das erzielbare Drehmoment, die Drehzahl, das Anlaufverhalten, den Wirkungsgrad und weitere Kenngrößen. Der Stator wird durch einen umlaufenden Eisenkern gebildet, auf dem sich Wicklungen zur Erzeugung eines magnetischen Feldes befinden. Der Magnetfluss, der durch die Wicklungen erzeugt wird, fließt zu einem großen Teil durch jeweils zwei Pole des Stators und durch jeweils zwei Pole des Rotors, wodurch das gewünschte Drehmoment auf den Rotor erzielt wird. Ein nicht zu vernachlässigender Anteil des erzeugten Magnetflusses fließt aber auch durch die nicht bewickelten Teile des umlaufenden Eisenkernes und durch die jeweils anderen Pole, wodurch deutliche Verluste entstehen.

Aus der DE 29 53 032 A1 ist prinzipiell bekannt, den Eisenkern des Stator eines dreiphasigen SR-Motors nicht vollständig umlaufend auszuführen. In einer Ausführungsform umfasst der Stator drei U-förmige Eisenkerne mit jeweils einer Wicklung, die dreiphasig bestromt werden. Der Rotor weist zwei Pole auf.

Die US 5,729,071 zeigt verschiedene Multipolmotoren, deren Kernblechpakete nach außen offene Schenkel aufweisen, welche über ein Abschlussblechpaket paarweise verbunden sind. Ein solches Kernblechpaket kann beispielsweise den Stator eines geschalteten Reluktanzmotors mit zwei, vier oder sechs Polen oder auch anderen Polzahlen bilden. Eine Ausführungsform eines solchen Reluktanzmotors umfasst einen Stator mit sechs Polen, wobei jeweils zwei der Pole eine U-Form ausbilden, die jeweils durch das Abschlussblechpaket geschlossen ist. Zwei der drei U-förmigen Doppelpole sind in einer Linie angeordnet, während der dritte Doppelpol senkrecht zu den beiden anderen angeordnet ist. Aufgrund dieser Anordnung können die Blechpakete verlustarm aus dem Ausgangsmaterial geschnitten werden.

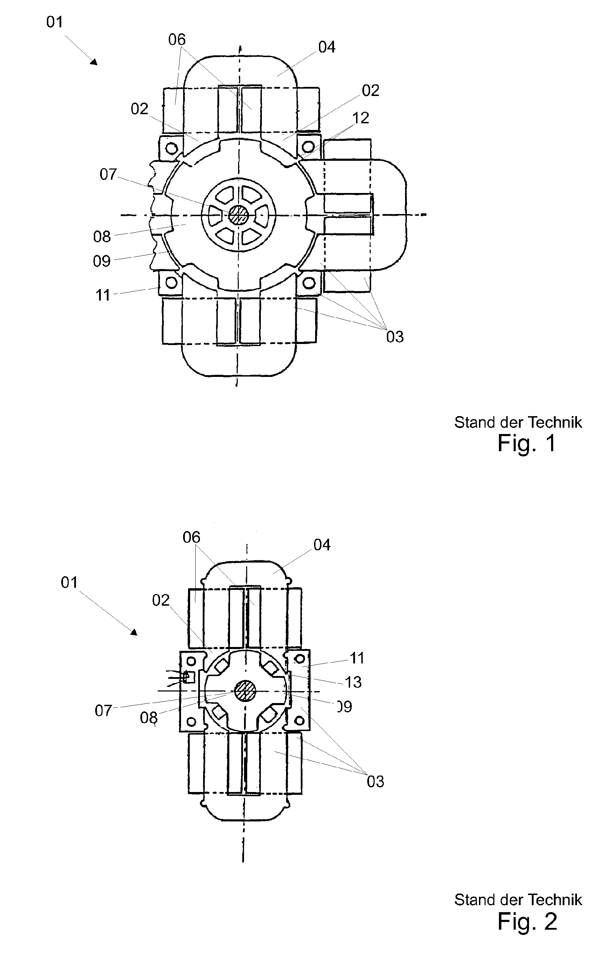

Aus der WO 96/09683 ist ein SR-Motor bekannt, bei dem der Eisenkern des Stators nicht vollständig umlaufend ausgeführt ist. Zum besseren Verständnis der weiter unten erläuterten Erfindung werden zunächst unter Bezug auf die beigefügten Fign. 1 und 2 zwei aus dem Stand der Technik bekannte Ausführungsformen eines solchen SR-Motors 01 erläutert. Nebeneinander liegende Pole 02 eines Stators 03 weisen paarweise einen gemeinsamen Eisenkern 04 auf. Wicklungen 06 auf diesen Eisenkernen 04 überdecken mehr als die Hälfte der aktiven magnetischen Länge dieser Eisenkerne 04. Durch die paarweise Anordnung der separaten Eisenkerne 04 sind die Wege des Magnetflusses verkürzt, sodass die Verluste verringert sind. Die Eisenkerne 04 sind paarweise diametral symmetrisch gegenüber einer Drehwelle 07 eines Rotors 08 angeordnet. Demzufolge ist ein solcher SR-Motor mit einer geraden Anzahl an Eisenkernen 04 auszuführen, wobei eine zweiphasige Ausführung mit vier Eisenkernen 04 bevorzugt ist. Dieser vorbekannte zweiphasige SR-Motor 01 weist acht Statorpole 02 und sechs Rotorpole 09 auf. Nachteilig an einer solchen Lösung ist, dass nur ein sehr geringer Raum zur Anordnung von Befestigungsmitteln für den Stator 03 verbleibt. Die Eisenkerne 04 sind mit Hilfe von Befestigungsblöcken 11 an einer Basisplatte befestigt. Die Befestigungsblöcke 11 müssen auf Grund des geringen verbleibenden Raumes zwischen den Eisenkernen 04 entsprechend klein ausgeführt sein. Jedoch wirken auf die Befestigungsblöcke 11 erhebliche Kräfte ein, da sie sämtliche Antriebskräfte des SR-Motors 01 aufnehmen müssen. Bei Ausführungen solcher SR-Motoren mit mehr als vier Eisenkernen 04 ist noch weniger Raum für Befestigungsmittel gegeben. Wenn auf Grund erhöhter sicherheitstechnischer Anforderungen verstärkte Isolationen für die Wicklungen 06 notwendig sind, ist nochmals weniger Raum für die Befestigungsmittel vorhanden. Ein weiterer Nachteil der Ausführungen mit vier und mehr Eisenkernen 04 ergibt sich durch die Nähe der Eisenkerne 04 zueinander im Bereich des Rotors 08. Die Eisenkerne 04 berühren sich nahezu an ihren äußeren Enden 12. Dadurch wird ein Teil des magnetischen Flusses nicht über den Rotor 08 geführt, sondern fließt in den benachbarten Eisenkern 04, wodurch er nicht mehr zur Drehmomenterzeugung zur Verfügung steht. Die WO 96/09683 gibt keinen Hinweis, dass ein SR-Motor mit acht Statorpolen auf vier Eisenkernen 04 einphasig ausgeführt werden kann.

Wird der SR-Motor 01 statt mit vier oder mehr Eisenkernen 04 mit zwei Eisenkernen 04 ausgeführt, so könnte dieser zwar einphasig betrieben werden, jedoch treten dann andere Nachteile auf. Die beigefügte Fig. 2 zeigt einen solchen SR-Motor mit zwei Eisenkernen 04. Die Pole 02 müssen am Spalt zum Rotor 08 mit spitzen Enden 13 ausgeführt sein. Dadurch breitet sich der magnetische Fluss in den Polen sehr ungleichmäßig aus, wodurch das erzielte Drehmoment verringert ist. Ein weiterer Nachteil ergibt sich aus dem vergrößerten Raumbedarf eines solchen SR-Motors 01. Zwar ist eine Ausführungsform mit zwei statt mit vier Eisenkernen 04 etwas schmaler, jedoch müssen die Eisenkerne 04 erheblich größer ausgeführt sein. Dies rührt daher, dass die Eisenkerne 04 ein größeres Zylindersegment des Rotors 08 abdecken müssen und somit einen größeren Querschnitt aufweisen müssen. Dieser vergrößerte Querschnitt resultiert in einer größeren Ausdehnung des Eisenkernes 04.

Die WO 96/09683 zeigt weiterhin eine Ausführung mit nur einem Eisenkern, der ähnlich wie bei der Ausführungsform mit zwei Eisenkernen 04 ausgeführt ist. Der besondere Nachteil einer solchen Ausführungsform liegt in der einseitigen Kraftwirkung auf die Drehwelle 07 des Rotors 08, die zu einem schlechten Anlaufverhalten und einem geringen Drehmoment führt. Ein solcher Motor ist für die meisten Anwendungen nicht geeignet.

Die Aufgabe der vorliegenden Erfindung besteht somit darin, einen einphasigen SR-Motor mit effizient genutzten Eisenkernen bereitzustellen, der die erläuterten Nachteile des Standes der Technik nicht aufweist. Eine Teilaufgabe der Erfindung besteht in einer verbesserten Einrichtung zur Positionierung des Rotors für den Start des einphasigen Motors.

Diese Aufgabe wird gelöst durch einen einphasigen SR-Motor gemäß dem beigefügten Anspruch 1.

Ein wesentlicher Vorteil der Erfindung ist darin zu sehen, dass durch die Abkehr von verschiedenen Ausführungskonventionen ein einphasiger SR-Motor erzielt wurde, der hinsichtlich mehrerer Kenngrößen ein Optimum darstellt. Insbesondere lassen sich trotz seines einfachen Aufbaues ein hohes Drehmoment und hohe Drehzahlen erzielen. Der Motor ist so konstruiert, dass das Verhältnis des Raumbedarfes zur Leistung des Motors sehr klein ist.

Weitere Vorteile, Einzelheiten und Weiterbildungen der Erfindung ergeben sich aus den nachfolgenden Beschreibungen bevorzugter Ausführungsformen, unter Bezugnahme auf die Zeichnung.
Es zeigen:
- Fig. 1: einen SR-Motor mit vier Eisenkernen in einem Stator gemäß dem Stand der Technik;
- Fig. 2: einen SR-Motor mit zwei Eisenkernen in einem Stator gemäß dem Stand der Technik;
- Fig. 3: einen Querschnitt einer bevorzugten Ausführungsform eines erfindungsgemäßen SR-Motors;
- Fig. 4: eine Draufsicht einer abgewandelten Ausführungsform des erfindungsgemäßen SR-Motors;
- Fig. 5: einen Längsschnitt des in Fig. 4 gezeigten Motors;
- Fig. 6: eine Perspektivansicht einer weiteren Ausführungsform des erfindungsgemäßen SR-Motors;
- Fig. 7: einen Rotor des erfindungsgemäßen SR-Motors in zwei Ansichten;
- Fig. 8: eine Ausführungsform einer Anordnung zur Start-Positionierung des Rotors;
- Fig. 9: eine abgewandelte Ausführungsform der Anordnung zur Start-Positionierung des Rotors;
- Fig. 10: eine nochmals veränderte Ausführungsform der in Fig. 9 gezeigten Anordnung zur Start-Positionierung des Rotors;
- Fig. 11: einen Schaltplan einer Endstufe zur Bestromung von Wicklungen des erfindungsgemäßen SR-Motors;
- Fig. 12: drei Varianten der Anordnung und Verschaltung der Wicklungen des erfindungsgemäßen SR-Motors.

Während die Fig. 1 und 2 bereits oben mit Bezug auf den Stand der Technik erläutert wurden, erfolgt nachfolgend eine detaillierte Darstellung der gezeichneten Ausführungsformen der Erfindung.

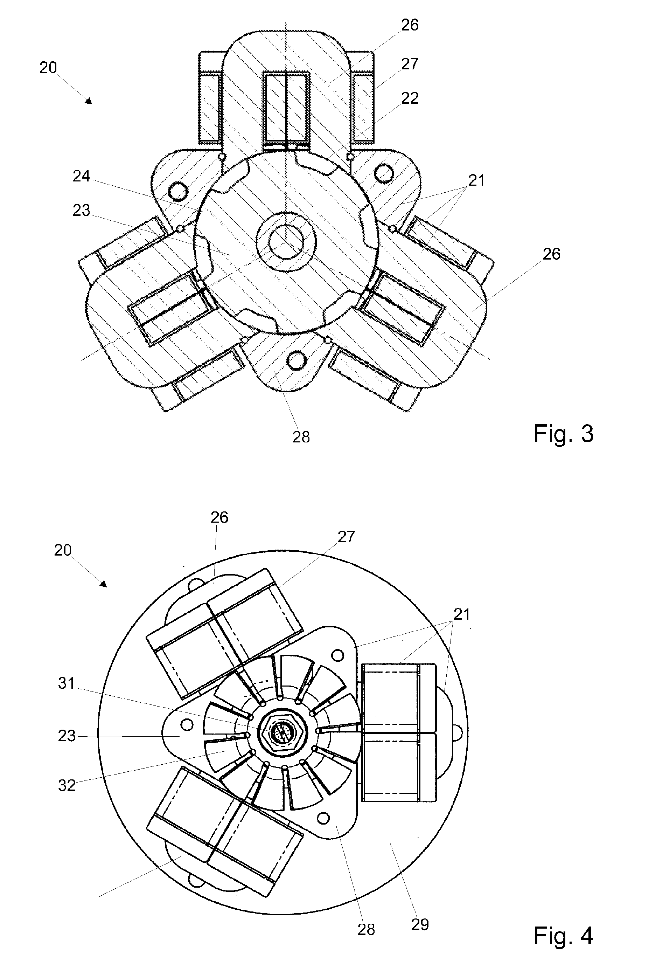

Fig. 3 zeigt einen Querschnitt einer ersten Ausführungsform eines erfindungsgemäßen einphasigen SR-Motors 20. Der SR-Motor 20 umfasst einen Stator 21 mit sechs Statorpolen 22 und einen Rotor 23 mit sechs Rotorpolen 24. Der Stator 21 umfasst drei U-förmige Eisenkerne 26, die im Winkel von 120° zueinander angeordnet sind. Die sechs Statorpole 22 sind im Winkel von etwa 60° zueinander angeordnet. Die sechs Rotorpole 24 sind in gleicher Weise angeordnet. Auf den U-förmigen Eisenkernen 26 befinden sich jeweils zwei Wicklungen 27. Es bedarf keiner zusätzlichen Hilfswicklungen für den beschleunigten Abbau des Magnetfeldes. Dies ist von besonderer Bedeutung für die Vereinfachung der elektronischen Steuerschaltung und reduziert auch die Herstellungskosten des Motors.

Zwischen den Eisenkernen 26 befinden sich Führungsblöcke 28, welche die Eisenkerne 26 fixieren. Da sich zwischen den Eisenkernen 26 ein Kreissegment von etwa 30° zur Befestigung der Eisenkerne 26 erstreckt, können die Führungsblöcke 28 ausreichend groß ausgeführt sein, um die Antriebskräfte des SR-Motors 20 aufnehmen zu können. Des Weiteren sind die Eisenkerne 26 an einem Grundkörper (nicht gezeigt) des SR-Motors 20 einzeln befestigt. Die Position der Eisenkerne 26 auf dem Grundkörper kann individuell in radialer Richtung verändert werden. Dadurch kann der Luftspalt zwischen den Rotorpolen 24 und den Statorpolen 22 jedes Eisenkernes 26 sehr genau auf das notwendige Minimum reduziert werden. Damit lässt sich der Wirkungsgrad des SR-Motors 20 gegenüber SR-Motoren entsprechend dem Stand der Technik steigern, bei denen die Luftspalte nicht individuell verändert werden können, da sie durch eine starre Eisenkernanordnung des Stators vorgegeben ist. Außerdem werden nur geringe Anforderungen an die Fertigungsgenauigkeit gestellt, da die präzise Einstellung des Luftspalts während der Montage in einem abschließenden Justageschritt erfolgen kann.

Die Führungsblöcke 28 weisen einen hohen magnetischen Widerstand auf. Dadurch ist gewährleistet, dass in dem zwischen den Eisenkernen 26 verbleibenden Kreissegment von 30° nahezu kein magnetischer Fluss zu einem benachbarten Eisenkern abgeleitet wird.

Die drei U-förmigen Eisenkerne des erfindungsgemäßen SR-Motors können auch in einer anderen Weise ausgeführt und angeordnet sein. Zur Erzielung anderer Größenverhältnisse oder anderer Leistungsparameter des SR-Motors 20 können die Statorpole 22 in einem Winkel abweichend von 60° zueinander angeordnet sein. Ebenso können die Statorpole 22 in mehreren Ebenen angeordnet sein. Weiterhin können bei einem erfindungsgemäßen SR-Motor 20 Hilfspole ergänzt sein, die nicht in der Funktion der Hauptpole stehen. Der Rotor 23 kann ebenso mit einer anderen Anzahl und Anordnung von Rotorpolen 24 ausgeführt sein. Obwohl der erfindungsgemäße SR-Motor 20 keiner weiteren Wicklungen bedarf, kann der SR-Motor 20 weitere Wicklungen umfassen. Mit weiteren Wicklungen auf dem Stator 21 oder auf dem Rotor 23 können beispielsweise ein anderes Anlaufverhalten oder andere Charakteristiken der Drehzahlen und Drehmomente, aber auch andere elektrische Eigenschaften erzielt werden. Ähnliche Wirkungen sind mit Dauermagneten im erfindungsgemäßen SR-Motor 20 erzielbar. Der erfindungsgemäße SR-Motor ist prinzipiell auch als Generator betreibbar.

Fig. 4 zeigt eine Draufsicht einer abgewandelten Ausführungsform des einphasigen SR-Motors 20. Der Stator 21 umfasst drei Eisenkerne 26 auf denen jeweils zwei Wicklungen 27 angeordnet sind. Die Eisenkerne 26 und die Führungsblöcke 28 sind auf dem Grundkörper 29 befestigt. Auf einer Welle 31 des Rotors 23 ist ein Lüfterrad 32 zur Kühlung des SR-Motors angeordnet.

Da die drei Eisenkerne 26 einzeln am Grundkörper 29 befestigt sind, können sie vor der Montage einzeln bewickelt werden, wodurch sich das Wickeln der Wicklungen 27 erheblich vereinfacht.

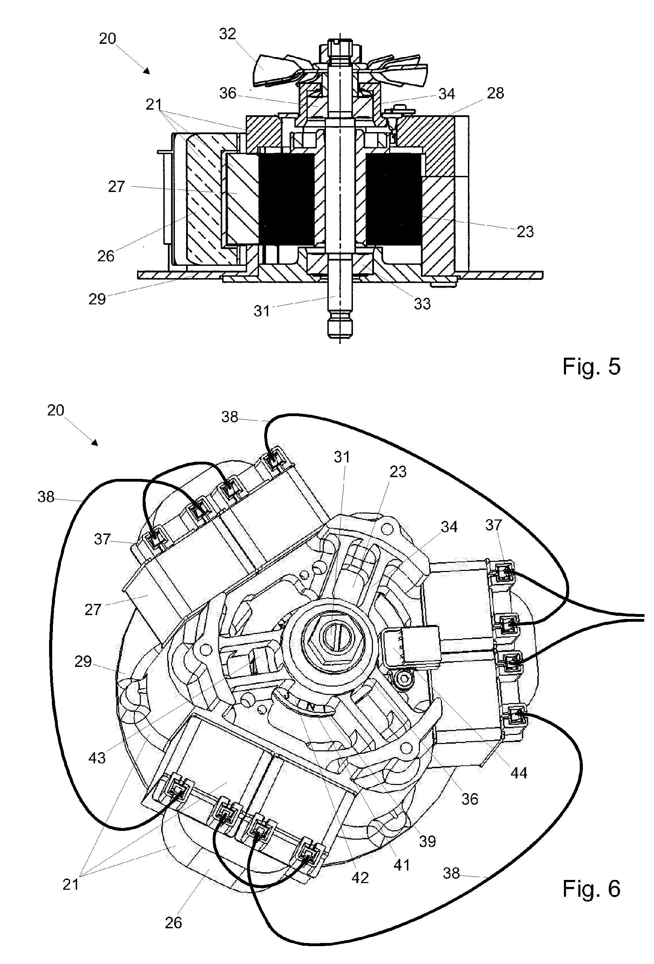

Fig. 5 zeigt einen Längsschnitt des in Fig. 4 gezeigten SR-Motors 20. Es ist insbesondere die vertikale Anordnung der Eisenkerne 26 mit den Wicklungen 27 im Stator 21 sowie die vertikale Anordnung des Lüfterrades 32 auf der Welle 31 des Rotors 23 dargestellt. Im Grundkörper 29 ist ein Wälzlager 33 zur Lagerung des Rotors 23 eingebracht. Auf den Führungsblöcken 28 des Stators 21 ist ein Aufsatz 34 befestigt, in dem ein zweites Wälzlager 36 zur Lagerung des Rotors 23 eingebracht ist.

Fig. 6 zeigt eine perspektivische Ansicht des SR-Motors 20 in einer weiteren abgewandelten Ausführungsform. Die Ansicht zeigt insbesondere den Aufsatz 34 auf dem Stator 21 mit der im Wälzlager 36 laufenden Welle 31 des Rotors 23. Der Grundkörper 29 und die Eisenkerne 26 sind in dieser Ansicht zu einem großen Teil verdeckt. An den Wicklungen 27 sind Kontakte 37 für den Anschluss elektrischer Leitungen 38 angeordnet. Da es sich um einen einphasigen SR-Motor 20 handelt, werden alle Wicklungen 27 gleichzeitig bestromt, sodass sie innerhalb des Motors miteinander elektrisch verbunden werden können. Bei der gezeigten Ausführungsform sind die sechs Wicklungen 27 in Reihe geschaltet. Es sind nur zwei elektrische Leitungen 38 vom Stator 21 wegzuführen. Da im Gegensatz dazu bei mehrphasigen SR-Motoren oder SR-Motoren mit Hilfswicklungen meist deutlich mehr elektrische Leitungen vom Stator weggeführt werden müssen, ist die Ausfallwahrscheinlichkeit dieser Ausführungsform des erfindungsgemäßen SR-Motors 20 auf Grund eines Leitungsbruches oder eines Kontaktproblems deutlich gemindert.

Auf der Welle 31 des Rotors 23 ist ein ringförmiger Magnet 39 mit mehreren paarigen Nordpolen 41 und Südpolen 42 befestigt. Im Aufsatz 34 ist ein Magnet 43 angeordnet, der dem ringförmigen Magneten 39 des Rotors 23 gegenübersteht. Der Magnet 43 im Aufsatz 34 dient während eines Auslaufvorganges zur Positionierung des Rotors 23 in eine Position, die ein erneutes Starten des einphasigen SR-Motors 20 ermöglicht. Ohne ein solches Mittel zur Positionierung könnte der SR-Motor 20 in einer Position zum Halten kommen, in der beim Bestromen der Wicklung zum erneuten Anlaufen des Motors kein oder ein in falscher Richtung wirkendes Drehmoment auf den Rotor 23 eingeprägt wird. Der Magnet 43 wird auch als Parkmagnet 43 bezeichnet.

Im Aufsatz 34 befindet sich weiterhin ein Hall-Sensor 44. Der Hall-Sensor 44 ist ebenfalls so angeordnet, dass er dem ringförmigen Magneten 39 des Rotors 23 gegenübersteht und sich in dessen Magnetfeld befindet. Der Hall-Sensor 44 dient zur Bestimmung der Position des Rotors 23 gegenüber den Statorpolen 22. Entsprechend dieser Position werden die Wicklungen 27 zeitweise bestromt, sodass der SR-Motor entsprechend dem aus dem Stand der Technik bekannten Grundprinzip eines einphasigen SR-Motors arbeiten kann.

In einer abgewandelten Ausführungsform befindet sich zur Start-Positionierung des Rotors 23 ein Park-Magnet im Bereich der Statorpole 22. Der Park-Magnet übt eine Kraft auf mindestens einen der Rotorpole 24 aus, sodass ein Drehmoment auf den Rotor 23 wirkt. Insofern die Spulen 27 bestromt sind, wirkt hierdurch auf den Rotor 23 ein Drehmoment, welches deutlich größer als das durch den Park-Magneten wirkende Drehmoment ist. Wird die Bestromung abgeschaltet, läuft der Rotor 23 aus und kommt in einer Position zum Stillstand, in der einer der Rotorpole 24 sich nahe dem Park-Magneten befindet. Wenn der Park-Magnet richtig angeordnet ist, wirkt an der dadurch eingenommenen Start-Position bei einer erneuten Bestromung der Spulen 27 ein Drehmoment auf den Rotor 23, welches den SR-Motor starten lässt. Durch die Anordnung des Park-Magneten im Bereich der Statorpole 22 wird eine Kraftwirkung auf die Rotorpole 24 erzielt, sodass es keiner zusätzlichen Magnete wie beispielsweise dem ringförmigen Magneten 39 auf dem Rotor 23 bedarf. Selbstverständlich können auch mehrere Parkmagneten im Bereich der Statorpole 22 angeordnet sein. Der Parkmagnet kann beispielsweise außermittig in einem der Statorpole 22 integriert sein. Der Park-Magnet kann radial oder axial gegenüber der Rotorwelle 31 angeordnet sein. Bei der radialen Annordnung steht einer der Pole des Magneten den Rotorpolen 24 gegenüber.

Gemäß einer besonders vorteilhaften Ausführungsform befindet sich der Park-Magnet in axialer Verlängerung einer möglichen Stellung eines Rotorpols, so dass ein Rotorpol in der Start-Position axial fluchtend mit dem Park-Magneten ausgerichtet ist. Der Park-Magnet ist so dimensioniert, dass er im Wesentlichen die Querschnittsfläche eines Rotorpols abdeckt. In der Start-Position fließt der vom Park-Magneten generierte Magnetfluss somit hauptsächlich durch den angrenzenden Rotorpol und nicht durch angrenzende Eisenbereiche des Rotors, so dass dieser in Position gehalten wird. Am Rotor müssen bei dieser Gestaltung keine zusätzlichen Hilfsmittel für die Start-Positionierung vorgesehen werden. Außerdem muss der Park-Magnet nicht in den Wicklungsbereich des Stators integriert werden.

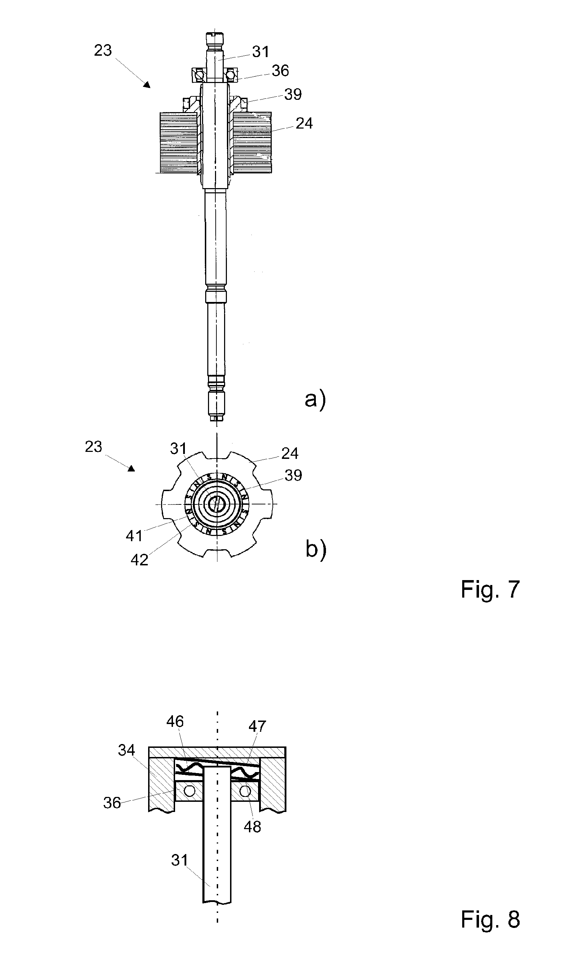

Fig. 7 zeigt zwei Ansichten des Rotors 23 des in Fig. 6 gezeigten Motors. Abbildung a) zeigt einen Querschnitt des Rotors 23 und Abbildung b) eine Draufsicht auf den Rotor 23. Es sind insbesondere die Welle 31, die Rotorpole 24 und das Wälzlager 36 dargestellt. Die Rotorpole 24 sind durch ein Blechpaket gebildet. Aus dem Stand der Technik sind verschiedene Lösungen für die Ausführung eines solchen Rotors bekannt. Es liegt im Wissen und Können des Fachmannes, eine geeignete Ausführung für den Rotor auszuwählen.

In Abbildung b) der Fig. 7 ist insbesondere der ringförmige Magnet 39 mit den kreisförmig verteilten Nordpolen 41 und Südpolen 42 dargestellt. Der ringförmige Magnet 39 weist sechs Paare an Nordpolen 41 und Südpolen 42 auf. Diese Paare sind in gleicher Weise wie die Rotorpole 24 ausgerichtet. Es kann auch eine andere Anzahl an Nordpolen 41 und Südpolen 42 des ringförmigen Magneten 39 gewählt werden, um eine andere Form der Positionierung gegenüber dem Park-Magneten 43 oder eine andere Positionsbestimmung gegenüber dem Hall-Sensor 44 zu realisieren. Beispielsweise kann die Anzahl der Paare an Nordpolen 41 und Südpolen 42 auch ein Teiler der Anzahl der Rotorpole 24 bzw. der Anzahl der Statorpole 22 betragen.

Fig. 8 zeigt eine abgewandelte Ausführungsform einer Anordnung zur Positionierung des Rotors 23 zum Start des erfindungsgemäßen SR-Motors 20. Die Anordnung umfasst insbesondere eine geneigte axiale Fläche 46 auf der Welle 31 des Rotors 23 und eine geneigte axiale Fläche 47 am Aufsatz 34, zwischen denen eine Wellfederscheibe 48 angeordnet ist. Die geneigte axiale Fläche 46 auf der Welle 31 ist mit der Welle 31 verbunden und rotiert mit dieser. Die geneigte axiale Fläche 47 am Aufsatz 34 ist starr mit dem Aufsatz 34 verbunden. Wenn der SR-Motor 20 abgeschaltet wird und der Rotor 23 ausläuft, wird er letztlich an einer Position anhalten, an der sich die geneigte axiale Fläche 46 auf der Welle 31 des Rotors 23 und die geneigte axiale Fläche 47 am Aufsatz 34 parallel gegenüberstehen, da dort die durch die Wellfederscheibe 48 eingeprägte Kraft minimal ist. In dieser Position wirkt bei einer Bestromung der Spulen 27 ein Drehmoment auf den Rotor 23, welches den SR-Motor 20 starten lässt. Die Anordnung mit der geneigten axialen Fläche 46 auf der Welle 31 des Rotors 23, der geneigten axialen Fläche 47 am Aufsatz 34 und der Wellfederscheibe 48 bilden ein Mittel zur Startpositionierung des Rotors 23 und sind daher eine Alternative zur Startpositionierung mit dem Park-Magneten 43. Diese Startpositionierung kann generell auch bei anderen Motoren eingesetzt werden, die eine definierte Startposition zum sicheren Anlauf benötigen.

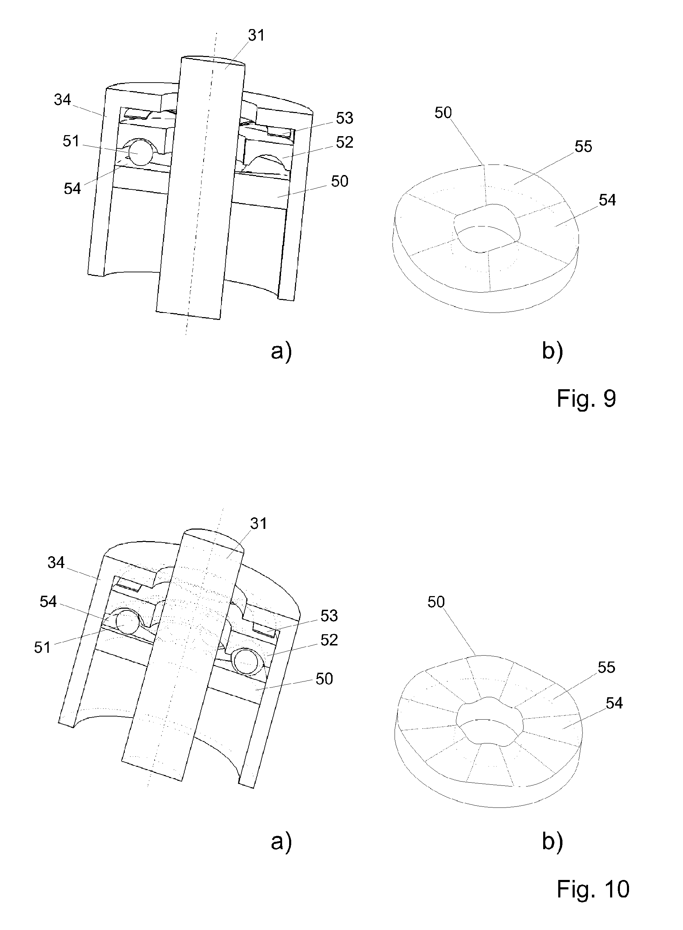

Fig. 9 zeigt eine weitere Ausführungsform einer Anordnung zur Start-Positionierung des Rotors 23. Abbildung a) zeigt eine Perspektivansicht und Abbildung b) zeigt ein Detail dieser Anordnung. Die Anordnung umfasst insbesondere eine Wellscheibe 50 und Kugeln 51, die in einer Kugelführungsscheibe 52 geführt sind. Die Wellscheibe 50 ist mit der Welle 31 verbunden und rotiert mit dieser. Die Kugelführungsscheibe 52 ist so mit dem Aufsatz 34 verbunden, dass eine Rotation mit der Welle 31 verhindert ist, jedoch eine Verschiebung der Kugelführungsscheibe 52 in axialer Richtung der Welle 31 möglich ist. Dadurch wird die Federkraft einer Wellfederscheibe 53 auf die Wellscheibe 50 und die Kugeln 51 übertragen, so dass die Wellscheibe 50 bestrebt ist, sich durch eine Rotation so zu positionieren, dass sich die Kugeln 51 in Wellentälern 54 der Wellscheibe 50 befinden.

Abbildung b) der Fig. 9 zeigt die Wellscheibe 50 im Detail. Die Wellscheibe 50 weist drei Wellentäler 54 und drei Wellenberge 55 auf. Folglich gibt es drei Positionen im Winkel von 120° zueinander, in welche die Welle 31 durch die gezeigte Anordnung gedrängt werden kann. Insofern die Spulen 27 bestromt werden, wirkt hierdurch auf den Rotor 23 ein Drehmoment, welches deutlich größer als das durch die Anordnung zur Start-Positionierung erzeugte Drehmoment ist. Wird die Bestromung abgeschaltet, läuft der Rotor 23 aus und kommt in einer der drei Positionen zum Stillstand, in die er durch die Start-Positionierungs-Anordnung gedrängt wird. In den möglichen Start-Positionen wirkt bei einer erneuten Bestromung der Spulen 27 ein Drehmoment auf den Rotor 23, welches den SR-Motor starten lässt.

Fig. 10 zeigt eine nochmals veränderte Ausführungsform der Start-Positionierungs-Anordnung. Abbildung a) zeigt eine Perspektivansicht und Abbildung b) zeigt die Wellscheibe 50 im Detail. Im Gegensatz zu der in Fig. 9 gezeigten Ausführung weist die Wellscheibe 50 sechs Wellentäler 54 und sechs Wellenberge 55 auf. Folglich gibt es sechs Positionen im Winkel von 60° zueinander, in welche die Welle 31 durch die Start-Positionierungs-Anordnung gedrängt werden kann. Es liegt im Können und Wissen des Fachmannes, die Anzahl und die Anordnung der Wellentäler 54 und der Wellenberge 55 der Wellscheibe 50 so auszuwählen, dass geeignete Startpositionierungen des SR-Motors erzielt werden. Generell kann durch eine höhere Anzahl der Wellentäler 54 und der Wellenberge 55 die durch die Anordnung zur Startpositionierung bewirkte Verlustleistung reduziert werden, jedoch dürfen keine Positionen eingenommen werden, bei denen ein sicherer Anlauf nicht gewährleistet ist. Die Anzahl der Kugeln 51 kann der Anzahl der Wellentäler 54 entsprechen oder abweichend gewählt sein. Für die Funktion der Anordnung zur Startpositionierung ist im Minimalfall nur eine Kugel 51 erforderlich. Selbstverständlich können die Funktionen der Wellscheibe 50 und der Kugelführungsscheibe 52 getauscht sein, sodass die Kugelführungsscheibe 52 mit dem Rotor 23 rotiert und die Wellscheibe 50 gegen Rotation gesichert ist. Ebenso kann die Federkraftwirkung durch eine andere Anordnung der Wellfederscheibe 53 oder durch ein andersartiges Federelement eingeprägt werden. Insofern es die Positionierung des SR-Motors während der Nutzung zulässt, kann diese Kraft auch durch die Gewichtskraft des Rotors 23 bereitgestellt werden. Die hier erläuterte Start-Positionierung kann generell auch bei anderen Motoren eingesetzt werden, die eine definierte Startposition für einen sicheren Anlauf benötigen.

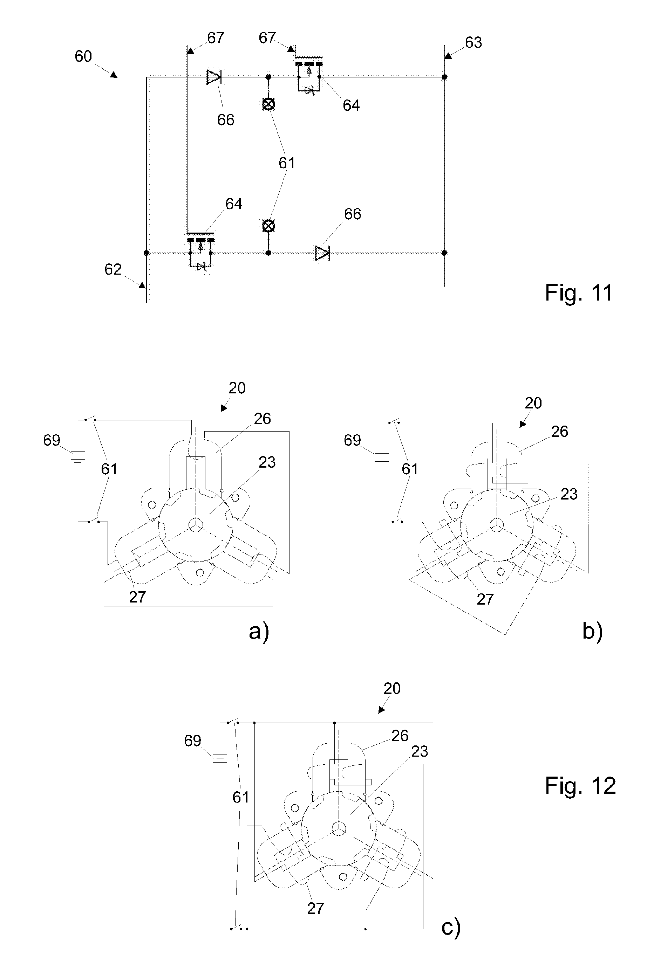

Fig. 11 zeigt einen Schaltplan einer Endstufe 60 zur Bestromung der Wicklungen 27 des erfindungsgemäßen SR-Motors 20. Die Endstufe 60 wird über elektrische Anschlüsse 61 mit den Wicklungen 27 verbunden. Zwischen einem elektrischen Massepotenzial 62 und einem Gleichspannungspotenzial 63 befinden sich in Reihe geschaltete Halbleiterstromventile 64 und Freilaufdioden 66. Die Endstufe 60 ist an eine Steuerschaltung (nicht gezeigt) angeschlossen, deren Ausgangssignale die Halbleiterstromventile 64 über deren Eingänge 67 steuern. Der Fachmann weiß, wie entsprechend der mit dem Hall-Sensor 44 ermittelten Position des Rotors 23 ein Signal zur Bestromung der Wicklungen 27 generiert werden kann.

Fig. 12 zeigt Prinzipskizzen von drei verschiedenen Ausführungsformen des erfindungsgemäßen SR-Motors 20 mit unterschiedlichen Anordnungen der Wicklungen 27. Abbildung a) der Fig. 12. zeigt eine Ausführungsform mit jeweils genau einer Wicklung 27 auf jedem U-förmigen Eisenkern 26. Abbildung b) der Fig. 12 zeigt eine Ausführungsform mit jeweils genau zwei Wicklungen 27 auf jedem U-förmigen Eisenkern 26, wobei die Wicklungen 27 in Reihe geschaltet sind. Abbildung c) der Fig. 12. zeigt eine Ausführungsform mit jeweils genau zwei Wicklungen 27 auf jedem U-förmigen Eisenkern 26, wobei die Wicklungen 27 in Reihe und parallel geschaltet sind. Die Wicklungen 27 sind in Fig. 12 durch jeweils eine Windung angedeutet. Die Halbleiterstromventile 64 sind durch ein Schaltersymbol angedeutet. Die Gleichspannung zur Versorgung des SR-Motors 20 ist mit einem Symbol für eine Gleichspannungsquelle 69 gekennzeichnet.

Die in Abbildung a) der Fig. 12 gezeigte Ausführung mit nur einer Wicklung 27 auf jedem Eisenkern 26 weist den Vorteil auf, dass gegenüber Ausführungen mit zwei Wicklungen 27 auf jedem Eisenkern 26 insgesamt drei Wicklungen als auch sechs Kontaktierungen im Stator 21 eingespart sind. Damit ist die Einfachheit des gesamten Motoraufbaues nochmals gesteigert und die Ausfallwahrscheinlichkeit nochmals gesenkt.

Die in Abbildung b) der Fig. 12 gezeigte Ausführung mit zwei Wicklungen 27 auf jedem Eisenkern 26 entspricht der in Fig. 6 gezeigten Ausführungsform. Ausführungsformen mit zwei Wicklungen 27 auf jedem Eisenkern 26 weisen gegenüber Ausführungsformen mit nur einer Wicklung 27 auf jedem Eisenkern 26 den Vorteil auf, dass sie kompakter sind und einen kleineren Raumbedarf haben. Durch die Reihenschaltung weist der durch die Wicklungen 27 gebildete Spulenkreis eine höhere Induktivität als aus dem Stand der Technik bekannte Ausführungen auf. Die erhöhte Induktivität wirkt sich positiv auf die Strombelastung der Halbleiterstromventile 64 aus. Aus diesem Grund ist diese Bauform besonders bevorzugt.

Bei der in Abbildung c) der Fig. 12 gezeigte Ausführung mit zwei Wicklungen 27 auf jedem Eisenkern 26 sind die beiden Wicklungen 27 eines jedes Eisenkernes 26 in Reihe geschaltet und die sich daraus ergebenden drei Wicklungspaare parallel geschaltet.

### Bezugszeichenliste

01 SR-Motor gemäß dem Stand der Technik
02 Statorpol
03 Stator
04 Eisenkern
05 -
06 Wicklung
07 Drehwelle
08 Rotor
09 Rotorpol
10 -
11 Befestigungsblock-
12 äußeres Ende des Eisenkerns
13 spitzes Ende des Eisenkerns

20 einphasiger SR-Motor
21 Stator
22 Statorpol
23 Rotor
24 Rotorpol
25 -
26 U-förmiger Eisenkern
27 Wicklung
28 Führungsblock
29 Grundkörper
30 -
31 Welle des Rotors
32 Lüfterrad
33 Wälzlager im Grundkörper
34 Aufsatz
35 -
36 Wälzlager im Aufsatz
37 Kontakt
38 elektrische Leitung
39 ringförmiger Magnet
40 -
41 Nordpol des ringförmigen Magneten
42 Südpol des ringförmigen Magneten
43 Magnet im Aufsatz (Park-Magnet)
44 Sensor (Hall-Sensor)
45 -
46 geneigte axiale Fläche auf der Welle des Rotors
47 geneigte axiale Fläche am Aufsatz
48 Wellfederscheibe
49 -
50 Wellscheibe
51 Kugel
52 Kugelführungsscheibe
53 Wellfederscheibe
54 Wellental
55 Wellenberg

60 Endstufe
61 elektrischer Anschluss der Wicklungen
62 elektrisches Massepotenzial
63 Gleichspannungspotenzial
64 Halbleiterstromventil
65 -
66 Freilaufdiode
67 Eingang des Halbleiterventils
68 -
69 Gleichspannungsquelle

## Patentansprüche

1. Einphasiger geschalteter Reluktanzmotor (20) mit
- einem Stator (21) mit Statorpolen (22) und mit mehreren Eisenkernen (26), deren Schenkel die Statorpole (22) bilden;
- mindestens einer Wicklung (27) auf jedem der Eisenkerne (26);
- einem Rotor (23) mit mehreren Rotorpolen (24);
- einem Mittel (39, 43; 46, 47, 48; 50, 51, 52, 53) zur Start-Positionierung des Rotors (23) in eine bevorzugte Startposition, wenn der Reluktanzmotor (20) nicht bestromt ist;
- einer elektronischen Steuerschaltung (60) zur Bestromung der Wicklungen (27),
**dadurch gekennzeichnet, dass** der Stator (21) sechs Statorpole (22) besitzt, die jeweils im Winkel von 60° zueinander angeordnet sind, und dass drei U-förmige Eisenkerne (26) ausgebildet sind, die jeweils zwei nebeneinander liegende Statorpole (22) bilden.

2. Reluktanzmotor (20) nach Anspruch 1, **dadurch gekennzeichnet, dass** der Rotor (23) sechs Rotorpole (24) umfasst, die jeweils im Winkel von 60° zueinander angeordnet sind.

3. Reluktanzmotor (20) nach Anspruch 2 oder 3, **dadurch gekennzeichnet, dass** die drei U-förmigen Eisenkerne (26) separat an einem Grundkörper (29) derart befestigt sind, dass sie beim Zusammenbau des Motors unabhängig voneinander in radialer Richtung zum Rotor (23) ausgerichtet werden können.

4. Reluktanzmotor (20) nach einem der Ansprüche 1 bis 3, **dadurch gekennzeichnet, dass** das Mittel zur Start-Positionierung des Rotors (23) gebildet ist durch eine gegenüber dem Rotor (23) geneigte axiale Fläche (46) am Rotor (23) und eine gegenüber dem Stator (21) fixierte, geneigte axiale Fläche (47), wobei die beiden geneigten axialen Flächen (46, 47) gegenüberstehend angeordnet sind und ein federndes Element (48) zwischen den beiden geneigten axialen Flächen (46, 47) angeordnet ist.

5. Reluktanzmotor (20) nach einem der Ansprüche 1 bis 3, **dadurch gekennzeichnet, dass** das Mittel zur Start-Positionierung des Rotors (23) gebildet ist durch eine mit dem Rotor (23) rotierende Wellscheibe (50) und eine drehfeste Kugelführungsscheibe (52), wobei zwischen der Wellscheibe (50) und der Kugelführungsscheibe (52) mindestens eine Kugel (51) geführt ist und ein federndes Element (53) eine Kraft auf die Kugeln (51) gegen die Wellscheibe (50) eingeprägt.

6. Reluktanzmotor (20) nach einem der Ansprüche 1 bis 3, **dadurch gekennzeichnet, dass** das Mittel zur Start-Positionierung des Rotors (23) gebildet ist durch einen feststehenden Park-Magneten (43), der auf mindestens einen der Rotorpole (24) eine Magnetkraft ausübt, sodass ein Drehmoment auf den Rotor (23) in Richtung einer bevorzugten Startposition eingeprägt wird.

7. Reluktanzmotor (20) nach einem der Ansprüche 1 bis 3, **dadurch gekennzeichnet, dass** das Mittel zur Start-Positionierung des Rotors (23) gebildet ist durch einen ringförmigen Magneten (39) auf dem Rotor (23) und einen Park-Magneten (43), wobei der Park-Magnet (43) gegenüber dem Stator (21) fixiert ist und dem ringförmigen Magneten (39) gegenübersteht.

8. Reluktanzmotor (20) nach einem der Ansprüche 1 bis 7, **dadurch gekennzeichnet, dass** er weiterhin einen Sensor (44) zur Bestimmung der Position des Rotors (23) umfasst, und dass die elektronische Steuerschaltung (60) die Wicklungen (27) in Abhängigkeit von der Position des Rotors (23) bestromt.

9. Reluktanzmotor (20) nach Anspruch 8, **dadurch gekennzeichnet, dass** die elektronische Schaltung (60) zur Bestromung der Wicklungen (27) zwei Halbleiterstromventile (64) umfasst, die in Reihe mit den Wicklungen (27) geschaltet sind.

10. Reluktanzmotor (20) nach einem der Ansprüche 1 bis 9, **dadurch gekennzeichnet, dass** jeder der drei Eisenkerne (26) zwei Wicklungen (27) umfasst und alle Wicklungen (27) in Reihe geschaltet sind und genau zwei elektrische Leitungen (38) zum elektrischen Anschluss der Wicklungen (27) vom Stator (21) weggeführt sind.

11. Reluktanzmotor (20) nach einem der Ansprüche 1 bis 9, **dadurch gekennzeichnet, dass** jeder der drei Eisenkerne (26) zwei Wicklungen (27) umfasst und die beiden Wicklungen (27) eines jeden Eisenkernes (26) in Reihe geschaltet sind und die drei Reihenschaltungen der Wicklungen (27) der drei Eisenkerne (26) parallel geschaltet sind.
